# EUROPEAN PATENT APPLICATION

(11) **EP 4 621 727 A1**
(43) Date of publication of application: **24.09.2025**
(21) Application number: 25162577.8
(22) Date of filing: 10.03.2025
(51) Int. Cl.: G06V 10/25, G06V 10/764, G06V 10/774, G06V 10/776, G06V 10/82

(54) **TRAINING DATA GENERATION DEVICE, LEARNING DEVICE, REGION DETECTION DEVICE AND COMPUTER PROGRAM**

(30) Priority: 18.03.2024 JP 2024042455
(71) Applicant: CASIO COMPUTER CO., LTD., Tokyo 151-8543 (JP)
(72) Inventor: Nakajima, Mitsuyasu, Hamura-shi, Tokyo, 205-8555 (JP); Hamada, Akira, Hamura-shi, Tokyo, 205-8555 (JP)
(74) Representative: Grünecker Patent- und Rechtsanwälte PartG mbB

(57) **Abstract**

A training data generation device includes one or more processors configured to: obtain a plurality of designated regions designated by a plurality of annotators as detection target regions with respect to a target image; assign, as labels, data selected from three or more different values indicating the degree of likelihood of being a detection target to respective regions in the target image based on the plurality of designated regions; and generate training data for a region estimator that estimates a detection target region by associating the target image with the labels assigned to the respective regions of the target image.

## Description

### TECHNICAL FIELD

The present disclosure relates to a training data generation device, a learning device, a region detection device and a computer program.

### BACKGROUND

A region estimator that detects a detection target region from an image is known. As such a region estimator, for example, a device that detects a lesion region from an image has been proposed, and is used in the medical field to support doctors in making diagnoses.

In order to cause the region estimator to learn the detection target region, training data including an image and a ground truth label that identifies the detection target region in the image is required. In order to accurately detect the detection target region using the region estimator, it is desirable that the ground truth label correctly identifies the detection target region, but it is not always easy to correctly annotate the ground truth label (see Davood Karimi, Haoran Dou, Simon K Warfield, and Ali Gholipour, "Deep learning with noisy labels: exploring techniques and remedies in medical image analysis", arXiv preprint arXiv:1912.02911,2019).

### SUMMARY

However, in the above-described related art, the knowledge of a plurality of annotators may not necessarily be fully utilized. In view of the circumstances described above, illustrative aspects of the present disclosure improve the detection accuracy of a detection target region.

A training data generation device according to one illustrative aspect of the present disclosure includes: one or more processors configured to: obtain a plurality of designated regions designated by a plurality of annotators as detection target regions with respect to a target image; assign, as labels, data selected from three or more different values indicating the degree of likelihood of being a detection target to respective regions in the target image based on the plurality of designated regions; and generate training data for a region estimator that estimates a detection target region by associating the target image with the labels assigned to the respective regions of the target image.

According to the above aspect, a technique is provided that contributes to improving the detection accuracy of the detection target region.

### BRIEF DESCRIPTION OF THE SEVERAL VIEWS OF THE DRAWINGS

FIG. 1 is a diagram illustrating a configuration of a system according to an illustrative embodiment.
FIG. 2 is a diagram illustrating a functional configuration of the system according to the illustrative embodiment.
FIG. 3 is a flowchart illustrating a procedure of training data generation processing performed by the system according to the illustrative embodiment.
FIG. 4 is a diagram illustrating an example of labels assigned to respective regions of a target image in which biopsy regions are annotated by a plurality of specialists.
FIG. 5 is a flowchart illustrating a procedure of learning processing performed by the system according to the illustrative embodiment.
FIG. 6 is a diagram illustrating a flow of data in the learning processing performed by the system according to the illustrative embodiment.
FIG. 7 is a flowchart illustrating a procedure of region detection processing performed by the system according to the illustrative embodiment.
FIG. 8 is a diagram illustrating a flow of data in the region detection processing performed by the system according to the illustrative embodiment.
FIGS. 9A and 9B are diagram illustrating a display example of a biopsy region detected in the region detection processing performed by the system according to the illustrative embodiment.
FIG. 10 is a diagram illustrating another example of labels assigned to respective regions of a target image in which biopsy regions are annotated by a plurality of specialists.
FIG. 11 is a diagram illustrating still another example of labels assigned to respective regions of a target image in which biopsy regions are annotated by a plurality of specialists.
FIG. 12 is a diagram illustrating an example of labels assigned to respective regions of a target image in which biopsy regions are annotated by a plurality of specialists.
FIG. 13 is a diagram illustrating still another example of labels assigned to respective regions of a target image in which biopsy regions are annotated by a plurality of specialists.
FIG. 14 is a diagram illustrating a configuration of a system according to another illustrative embodiment.

### DETAILED DESCRIPTION

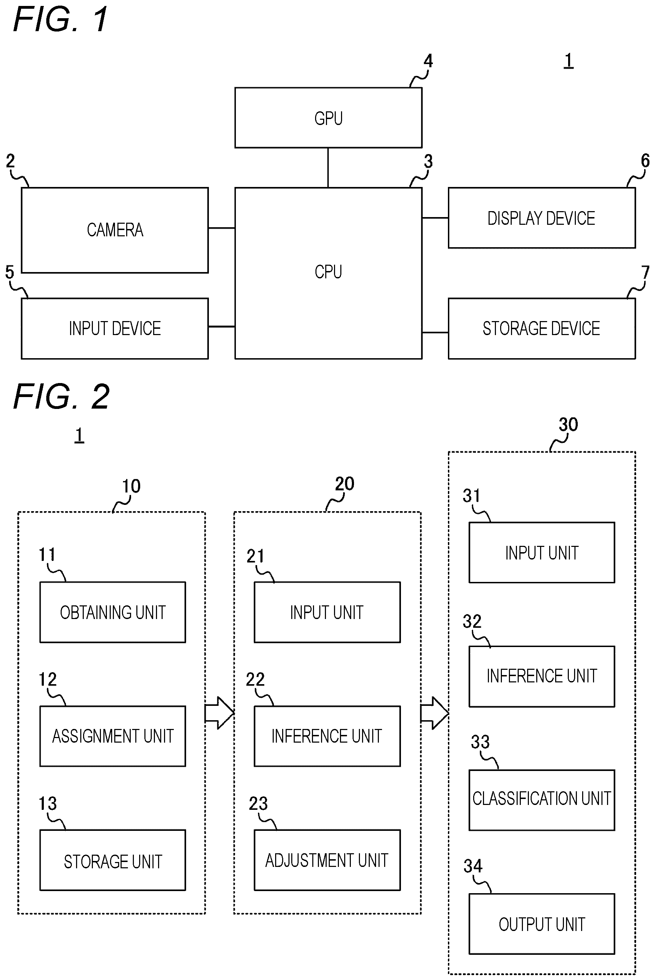

FIG. 1 is a diagram illustrating a configuration of a system according to an illustrative embodiment. FIG. 2 is a diagram illustrating a functional configuration of the system according to the illustrative embodiment. A system 1 illustrated in FIGS. 1 and 2 is a system that is configured to create training data for a machine learning model that detects a target region, cause the machine learning model to learn the target region using the created training data, and detect a target region using the trained machine learning model.

In the following, as a specific example of the system 1, a medical diagnosis support system that detects a biopsy region as a detection target region from an image for a colposcopy examination will be described as an example. However, the system 1 is not limited to a biopsy region, and may be a medical diagnosis support system that detects any region. The system 1 can be used not only to a medical diagnosis support system but also to any application for detecting a region from an image, for example, an industrial application such as product inspection.

As illustrated in FIG. 1, the system 1 includes a camera 2, a CPU 3, a GPU 4, an input device 5, a display device 6, and a storage device 7. The camera 2 is an imaging device of the system 1, and captures images of the cervix, for example.

The CPU 3, the GPU 4, the input device 5, the display device 6, and the storage device 7 are components of a computer of the system 1. The CPU 3 is a control unit of the computer of the system 1 and controls the operation of the system 1. The GPU 4 and the CPU 3 are components of a calculation unit of the computer of the system 1. The input device 5, the display device 6, and the storage device 7 are, for example, a touch panel, a liquid crystal display, and a semiconductor memory, respectively, and are an input unit, a display unit, and a storage unit of the computer of the system 1, respectively.

The system 1 operates as a training data generation device 10, a learning device 20, and a region detection device 30 by the CPU 3 and the GPU 4 executing a program stored in the storage device 7. That is, the system 1 includes a training data generation device 10, a learning device 20, and a region detection device 30.

Hereinafter, the training data generation device 10, the learning device 20, and the region detection device 30 included in the system 1 will be described in detail.

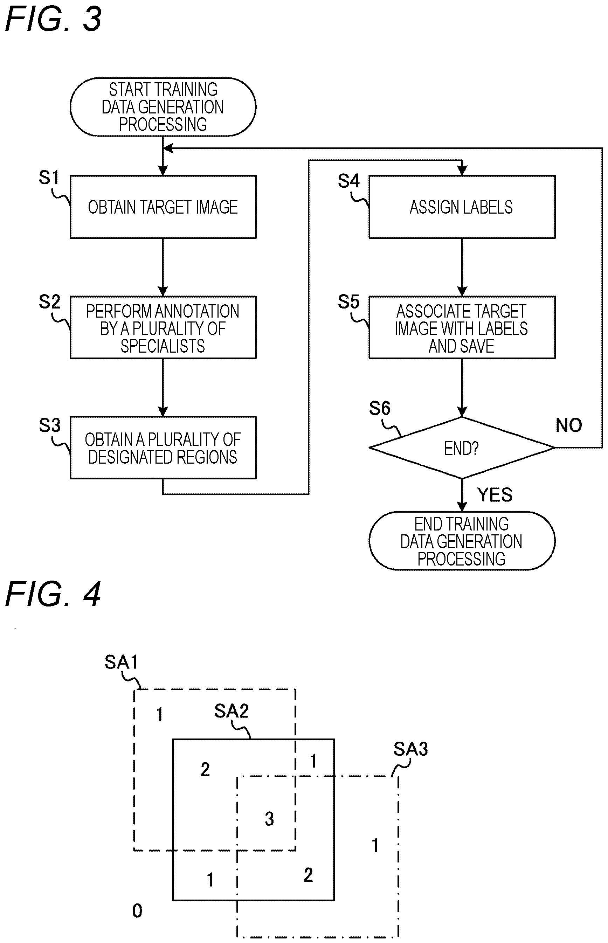

FIG. 3 is a flowchart illustrating a procedure of training data generation processing performed by the system according to the illustrative embodiment. FIG. 4 is a diagram illustrating an example of labels assigned to respective regions of a target image in which biopsy regions are annotated by a plurality of specialists. Hereinafter, a configuration of the training data generation device 10 included in the system 1 and processing performed by the training data generation device 10 will be described with reference to FIGS. 2 to 4.

The training data generation device 10 generates training data for a machine learning model that detects, as a biopsy region, a region in which a lesion is suspected in a target image captured by the camera 2. Specifically, the training data generation device 10 is a device that generates training data based on a plurality of designated regions designated as biopsy regions by a plurality of annotators for the target image, and includes an obtaining unit 11, an assignment unit 12, and a storage unit 13 as illustrated in FIG. 2.

The obtaining unit 11 obtains a plurality of designated regions designated as biopsy regions for the target image by the plurality of annotators described above. The assignment unit 12 assigns data indicating the degree of likelihood of being a detection target (biopsy region) as a label to each region in the target image, based on the plurality of designated regions obtained by the obtaining unit 11. Here, the data to be assigned as a label is data selected from data of three or more different values, and is, for example, variable values of an ordinal scale, an interval scale, or a proportional scale selected from three or more different values. The storage unit 13 is a generation unit that generates training data for a machine learning model that estimates a biopsy region by associating a target image with labels assigned to respective regions of the target image, and stores the generated training data in a storage device. The machine learning model that estimates a biopsy region is an example of a region estimator that infers a detection target region.

The obtaining unit 11, the assignment unit 12, and the storage unit 13 are implemented by a processor (CPU 3 and GPU 4 illustrated in FIG. 1) of the computer of the training data generation device 10 executing a program for generating the training data stored in the storage device 7 and performing the training data generation processing illustrated in FIG. 3. The training data generation processing illustrated in FIG. 3 is an example of a method for generating training data. The processing may be performed by a single processor, or by a plurality of processors in cooperation.

When the processor executes the program for generating training data, the processor first obtain a target image captured by the camera 2 from the storage device 7 and displays the target image on the display device 6 (step S1).

Thereafter, when a plurality of specialists who are annotators use the input device 5 to annotate the target image displayed on the display device 6 to designate biopsy regions, the processor receives the designation operation (step S2) and obtains a plurality of designated regions designated by the annotations (step S3). Here, as illustrated in FIG. 4, a case will be described as an example in which three specialists designate a designated region SA1, a designated region SA2, and a designated region SA3, which are regions in the target image, for the target image.

The processor assigns a label to each region in the target image based on the plurality of designated regions obtained in step S3 (step S4). Here, for example, the processor may count the number of votes for each region by regarding the region designation by each of the specialists as one vote for each unit region in the designated region designated by the region designation, and assign the number of votes counted for each region as a label for that region. That is, in step S4, the processor may determine a variable value (label) of each unit region, based on the number of designated regions including that unit region among the plurality of designated regions. Such calculation is desirable in that it is easy and appropriate as a value indicating the degree of likelihood of being a detection target. Each unit region is, for example, one pixel, but is not limited to one pixel, and a set of a plurality of pixels such as 2 × 2 pixels may be regarded as one unit region.

FIG. 4 illustrates a state in which "3" is assigned as a label to each unit region in a region in which the designated region SA1, the designated region SA2, and the designated region SA3 all overlap, "2" is assigned as a label to each unit region in a region in which any two designated regions of the designated region SA1, the designated region SA2, and the designated region SA3 overlap, "1" is assigned as a label to each unit region in a region that does not overlap other designated regions in the designated region SA1, the designated region SA2, and the designated region SA3, and "0" is assigned as a label to each unit region in a region that is not included in any of the designated region SA1, the designated region SA2, and the designated region SA3. The labels illustrated in FIG. 4 are variable values of a proportional scale selected from four values of "0", "1", "2", and "3", and are values indicating the degree of likelihood of being a biopsy region based on evaluations of the three specialists.

When the assignment of labels to each unit region is completed, the processor associates the target image obtained in step S1 with the labels assigned to the target image in step S4, generates training data, and stores the training data in the storage device 7 (step S5).

Thereafter, the processor determines whether the assignment of labels to all target images is completed (step S6). If the assignment is not completed (NO in step S6), the processor obtains a new target image in step S1 and repeats the processing from step S2 to step S5. If the assignment of labels to all the target images is completed (YES in step S6), the processor ends the training data generation processing illustrated in FIG. 3.

The training data generation device 10 that performs the training data generation processing illustrated in FIG. 3 generates training data in which labels (also referred to as ground truth labels) are expressed in three or more values, as illustrated in FIG. 4. By using such training data, it is possible to improve the performance of the machine learning model, specifically, the detection accuracy of the detection target region. Therefore, the training data generation device 10 can contribute to the improvement of the detection accuracy of the detection target region by the machine learning model. **In** the following, it will be described that the detection accuracy is improved by expressing the labels with three or more values.

A label included in training data for a machine learning model for region detection is normally represented by two values since it is only necessary to distinguish between detection target regions and non-detection target regions. Such representation by two values is an accurate and most efficient representation when a detection target region can be accurately annotated (for example, when a detection target region is known). However, in many cases, the detection target region cannot be determined in a training data creation stage (for example, the detection target region is unknown). The annotation by a plurality of annotators on the same image as described above is typically performed in the latter case.

In the latter case, if information of three or more values originally given by a plurality of annotators is converted into information of two values and assigned as a label, a part of information input by the plurality of annotators is lost. For example, in order to generate training data for a machine learning model that detects, as a biopsy region, a region determined to be a biopsy region by all of a plurality of annotators, a case is an example thereof in which when the three designated regions illustrated in FIG. 4 are designated, the regions are divided into a region in which the three designated regions overlap (a region marked with "3" in FIG. 4) and the other regions (regions marked with "0", "1", and "2" in FIG. 4) and binarized. **In** this case, information for distinguishing between "0", "1", and "2" illustrated in FIG. 4 is lost.

On the other hand, the training data generation device 10 can provide training data in which information input by a plurality of annotators is reflected without being damaged by assigning three or more values as labels. Accordingly, the knowledge of the annotators can be sufficiently utilized by the learning using this training data, and thus the accuracy of region detection can be improved. Specifically, in the above example, the region (the region "0" illustrated in FIG. 4) supported by no annotator and the regions (the regions "1" and "2" illustrated in FIG. 4) supported by some of the annotators are distinguished from each other, and thus it is possible to more accurately detect the region (the region "3" illustrated in FIG. 4) supported by all of the annotators, which is the detection target region.

In this example, the region (the region "3" illustrated in FIG. 4) supported by all of the annotators is set as the detection target region, but the training data using three or more values generated by the training data generation device 10 and training data in the related art using two values are the same in that the region supported by all of the annotators, which is the detection target region, is distinguished from other regions. This point deserves much attention, and suggests that when learning the detection target, classifying and learning objects other than the detection target in terms of their relevance to the detection target may improve the detection accuracy of the detection target itself.

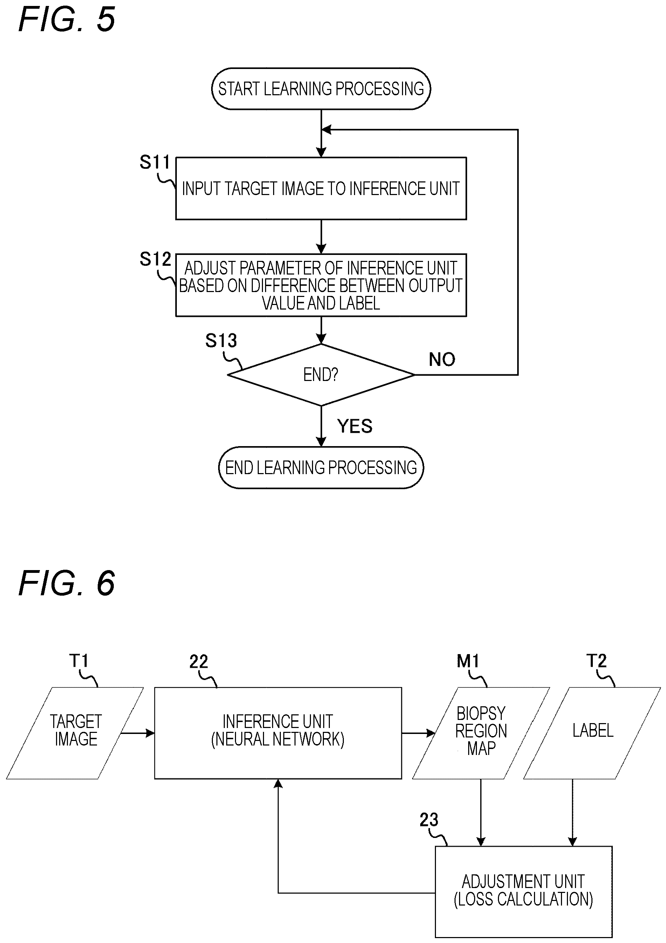

FIG. 5 is a flowchart illustrating a procedure of learning processing performed by the system according to the illustrative embodiment. FIG. 6 is a diagram illustrating a flow of data in the learning processing performed by the system according to the illustrative embodiment. Hereinafter, a configuration of the learning device 20 included in the system 1 and processing performed by the learning device 20 will be described with reference to FIGS. 2, 5, and 6.

The learning device 20 is a learning device that causes a machine learning model to learn a biopsy region, which is a region in which a lesion is suspected in a target image captured by the camera 2, as a detection target region. Specifically, the learning device 20 is a device that trains a machine learning model, which is a region estimator that detects a biopsy region from a target image, using training data generated by the training data generation device 10, and includes an input unit 21, an inference unit 22, and an adjustment unit 23 as illustrated in FIG. 2.

The input unit 21 inputs the target image included in the training data generated by the training data generation device 10 to the inference unit 22. The inference unit 22 is a region estimator that estimates a biopsy region, which is a detection target region. Specifically, the inference unit 22, which is a region estimator, is a deep neural network which is a machine learning model for supervised learning, and is a regression model that outputs values indicating the likelihood of being a biopsy region corresponding to respective regions of the input target image as inference results. The adjustment unit 23 adjusts parameters of the inference unit 22 based on comparison results between the values corresponding to the respective regions in the target image output from the inference unit 22 and label values corresponding to respective regions included in the training data. Specifically, based on differences between the values corresponding to the respective regions in the target image output from the inference unit 22 and the label values corresponding to the respective regions included in the training data, the adjustment unit 23 adjusts the parameters of the inference unit 22, specifically, weights and biases between nodes (that is, edges) of the deep neural network such that the differences decrease.

The input unit 21, the inference unit 22, and the adjustment unit 23 are implemented by the processor (CPU 3 and GPU 4 illustrated in FIG. 1) of the computer of the learning device 20 executing a program for learning the detection target region stored in the storage device 7 and performing the learning processing illustrated in FIG. 5. The processing may be performed by a single processor, or by a plurality of processors in cooperation. The learning processing illustrated in FIG. 5 is an example of a method for learning a detection target region.

When the processor executes a program for learning a detection target region, as illustrated in FIG. 6, the processor first obtains a target image T1, which is training data, from the storage device 7 and inputs the target image T1 to the inference unit 22 (deep neural network) (step S11). Accordingly, the inference unit 22 outputs a biopsy region map M1 as an inference result.

Thereafter, the processor obtains the biopsy region map M1 output by the inference unit 22 and a label T2 associated with the target image T1 input to the inference unit 22, and inputs the biopsy region map M1 and the label T2 to the adjustment unit 23. Accordingly, the adjustment unit 23 adjusts the parameters of the inference unit 22 based on differences between values (output values) of respective regions of the biopsy region map M1 and the label T2 (step S12). More specifically, the adjustment unit 23 sequentially updates the parameters of the weights and the biases by performing a loss calculation (a gradient calculation of a loss function) such that an error (difference) between the output value and the label decreases. As the loss function, for example, the mean square error is used.

Thereafter, the processor determines whether to end the learning (step S13), and if not (NO in step S13), the processor repeats the processing of step S11 and step S12 using new training data (a set of target image and label). If the learning using the training data to be learned is to be ended (YES in step S13), the processor ends the learning processing illustrated in FIG. 5.

The learning device 20 performing the learning processing illustrated in FIG. 5 causes a machine learning model (the inference unit 22) to learn a biopsy region as a detection target region using training data having labels with three or more values as illustrated in FIG. 4. In other words, unlike a method in which an unknown biopsy region is defined by estimation based on opinions of a plurality of annotators in a stage prior to learning, and the biopsy region is learned using the result (training data with binarized labels), the learning device 20 regards the opinions of the plurality of annotators as the likelihood of being a biopsy region, and learns the biopsy region using the likelihood of a biopsy region. Accordingly, it is possible to prevent information loss in the stage prior to learning, thereby enabling accurate inference of the opinions of the annotators, and as a result, it is possible to improve the detection accuracy of the actual biopsy region, which is the detection target region. Therefore, the learning device 20 can also contribute to the improvement of the detection accuracy of the detection target region by the machine learning model.

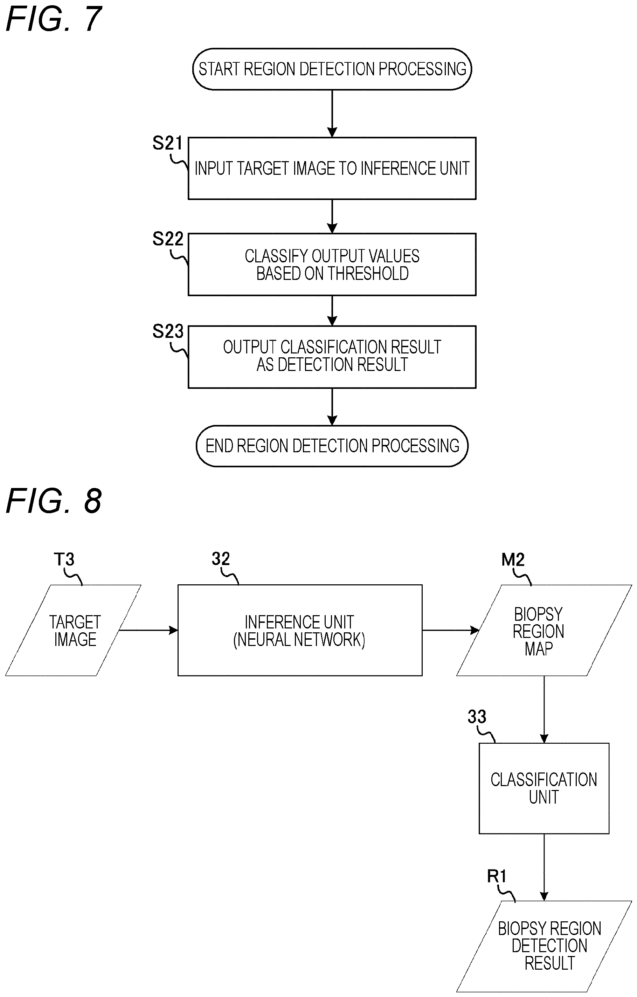

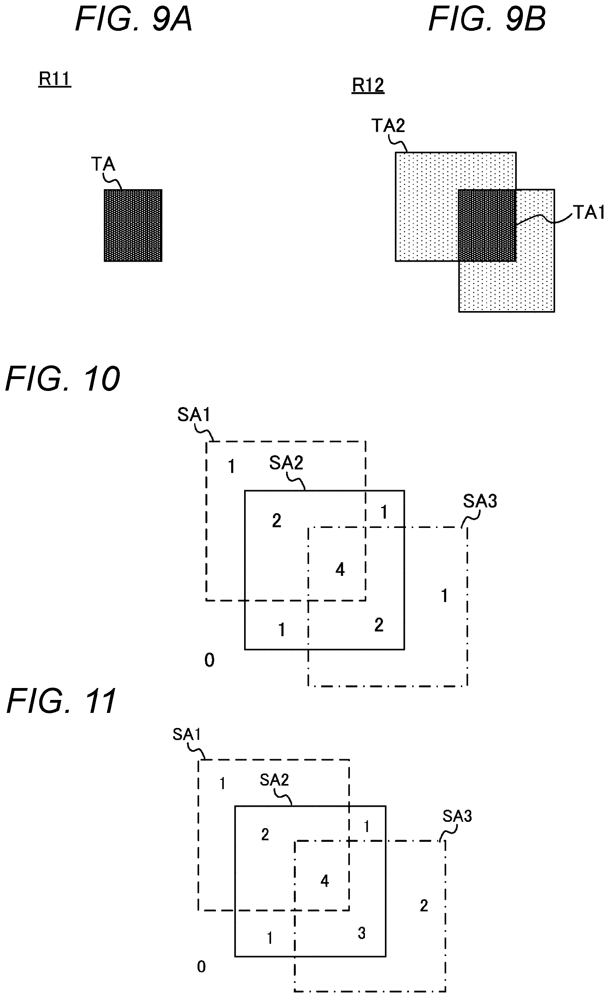

FIG. 7 is a flowchart illustrating a procedure of region detection processing performed by the system according to the illustrative embodiment. FIG. 8 is a diagram illustrating a flow of data in the region detection processing performed by the system according to the illustrative embodiment. FIGS. 9A and 9B is a diagram illustrating a display example of a biopsy region detected in the region detection processing performed by the system according to the illustrative embodiment. Hereinafter, a configuration of the region detection device 30 included in the system 1 and processing performed by the region detection device 30 will be described with reference to FIGS. 2, and 7 to 9A and 9B.

The region detection device 30 is a device that detects a biopsy region, which is a region in which a lesion is suspected, in a target image captured by the camera 2. Specifically, the region detection device 30 is a device that detects a biopsy region, which is a detection target region, based on an inference result output from a machine learning model trained by the learning device 20, and includes an input unit 31, an inference unit 32, a classification unit 33, and an output unit 34 as illustrated in FIG. 2.

The input unit 31 inputs a target image for detecting a biopsy region to the inference unit 32, which is a region estimator trained by the learning device 20. The inference unit 32 is a region estimator that estimates a biopsy region, which is a detection target region, and the parameters of the inference unit 22 are adjusted by learning. That is, the inference unit 32 is a deep neural network which is a machine learning model for supervised learning, and is a regression model that outputs values indicating the likelihood of being a biopsy region corresponding to respective regions of the input target image as inference results.

The classification unit 33 classifies the values corresponding to the respective regions in the target image output from the inference unit 32 into numbers less than the number of possible values of a label included in training data, based on a threshold. As an example, the classification unit 33 classifies the values into two types: "1" indicating a biopsy region and "0" indicating a non-biopsy region, but the classification unit 33 may also classify the values into three types: "2" indicating a first biopsy region that is certain to be a biopsy region, "1" indicating a second biopsy region that is suspected to be a biopsy region, and "0" indicating a non-biopsy region. The output unit 34 outputs the results of classifying the values corresponding to the respective regions in the target image by the classification unit 33 as a detection result of the detection target region detected from the target image.

The input unit 31, the inference unit 32, the classification unit 33, and the output unit 34 are implemented by the processor (CPU 3 and GPU 4 illustrated in FIG. 1) of the computer of the region detection device 30 executing a program for detecting a detection target region stored in the storage device 7 and performing the region detection processing illustrated in FIG. 7. The processing may be performed by a single processor, or by a plurality of processors in cooperation. The region detection processing illustrated in FIG. 7 is an example of a method for detecting a detection target region.

When the processor executes the program for detecting a detection target region, the processor first obtains a target image T3 from the storage device 7 and inputs the target image T3 to the inference unit 32 (deep neural network) as illustrated in FIG. 8 (step S21). Accordingly, the inference unit 32 outputs a biopsy region map 2 as an inference result.

Thereafter, the processor obtains the biopsy region map M2 output by the inference unit 32, and inputs the biopsy region map M2 to the classification unit 33. Accordingly, the classification unit 33 classifies values (output values) of respective regions of the biopsy region map M2 based on a threshold (step S22). Here, the values are classified into numbers equal to or less than the number of possible values of a label of training data.

For example, in a case in which the machine learning model of the inference unit 32 is trained with the training data having labels with four values from 0 to 3 as illustrated in FIG. 4, the output value ranges from approximately 0 to 3, and these values are classified into three or less types. In a case in which a region that is determined as a biopsy region by all of a plurality of annotators (three people) is estimated to be a biopsy region, and other regions are estimated to be non-biopsy regions, the threshold may be set to, for example, 2.5 (or a value greater than 2.5). Accordingly, values equal to or greater than 2.5 and values less than 2.5 are classified into two values, for example, "1" and "0". In a case in which a region that is determined to be a biopsy region by all of the three annotators is estimated to be a first biopsy region, a region that is determined to be a biopsy region by two annotators is estimated to be a second biopsy region, and other regions are estimated to be non-biopsy regions, the threshold may be set to, for example, 2.5 and 1.5. Accordingly, values equal to or greater than 2.5, values less than 2.5 and equal to or greater than 1.5, and values less than 1.5 are classified into three values, for example, "2", "1", and "0".

Finally, the processor outputs the classification result as a biopsy region detection result R1 (step S23). The processor may output the biopsy region detection result R1, which is, for example, an image of the same size as the target image, to the display device 6 and display the biopsy region detection result R1 on the display device 6. That is, outputting the classification result as the biopsy region detection result R1 may be displaying the classification result as an image.

Instead of or in addition to displaying the classification result on the display device 6, the processor may output the classification result as the biopsy region detection result R1 to the storage device 7 and store the classification result in a non-volatile manner in the storage device 7. The processor may process the target image using the biopsy region detection result R1 and output the processed image to the display device 6. In this case, for example, an image in which the biopsy region is marked on the target image may be displayed.

A biopsy region detection result R11 illustrated in FIG. 9A is an example in which the biopsy region map M2 is classified into two values in step S22, and a biopsy region TA is displayed separately from the other regions. A biopsy region detection result R12 illustrated in FIG. 9B is an example in which the biopsy region map M2 is classified into three values in step S22, and a first biopsy region TA1, a second biopsy region TA2, and other regions are displayed separately.

The region detection device 30 that performs the region detection processing illustrated in FIG. 7 detects a detection target region by classifying output results of the machine learning model (inference unit 32) trained using the training data having labels with three or more values as illustrated in FIG. 4 into numbers equal to or less than the number of possible values of the labels. That is, the region detection device 30 detects a detection target region using a machine learning model that is trained with more classifications in a learning stage than classifications distinguished in a detection stage (including inference using the machine learning model and subsequent classification processing). Accordingly, even when the same classification (here, corresponding to the detection target region) is detected, the classification can be detected with high accuracy, and thus the detection target region can be detected with higher accuracy than in the related art. Therefore, the region detection device 30 can also contribute to the improvement of the detection accuracy of the detection target region by the machine learning model. By displaying the detection result as an image, a user can easily understand the detection result.

The illustrative embodiment described above is a specific example for facilitating understanding of the present disclosure, and the present disclosure is not limited to the illustrative embodiment but should be understood to include various modifications and alternative forms of the illustrative embodiment described above. For example, it should be understood that the illustrative embodiment described above can be embodied by modifying the components without departing from the gist thereof. Further, it should be understood that various modes may be carried out by suitably combining a plurality of components disclosed in the illustrative embodiment described above. Furthermore, it should be understood by those skilled in the art that various illustrative embodiments may be implemented by deleting a part of components from all the components shown in the illustrative embodiment or adding a part of components to the components shown in the illustrative embodiment. That is, the training data generation method, region estimator learning method, region detection method, program, training data generation device, learning device, and region detection device described above can have various modifications and variations without departing from the scope of the claims.

In the illustrative embodiment described above, an example has been described in which, when training data is generated, the number of votes from a plurality of annotators are directly assigned as labels, but the method for assigning labels is not limited thereto. When labels are assigned, a variable value for each region may be determined based on a weighting calculation for each region according to at least one of the characteristics of a plurality of annotators who specify a plurality of designated regions, a classification result of a target image to which the plurality of designated regions are designated, or the overlap of the plurality of designated regions. For example, weighting may be performed based on various ideas as follows.
(1) Weighting according to the number of votes
(2) Weighting according to voter (annotator)
(3) Weighting according to voting area
(4) Weighting according to image type

FIG. 10 illustrates an example of weighting according to the number of votes. In the example of FIG. 10, a label value of a region that is unanimously determined to be a biopsy region is increased by one point to "4". That is, the label value is calculated by changing the weighting depending on whether the number of votes is 0, 1, or 2 or 3. According to this example, a regions that is unanimously determined to be a biopsy region through learning is evaluated more highly than ever before. By maintaining a threshold used for classification, it is possible to further reduce missed detection of a region that is unanimously determined to be a biopsy region during inference. Accordingly, the improvement in the detection accuracy of the biopsy region can be expected.

FIG. 11 illustrates an example of weighting according to a voter. In the example of FIG. 11, a vote of an annotator who designates a designated region SA3 is weighted twice as much as votes of other annotators to calculate a label value. According to this example, the opinion of a doctor familiar with a detection target (for example, a specialist or veteran doctor for that detection target) can be given more weight than other doctors when assigning labels. In this case as well, the improvement in the detection accuracy of the biopsy region can be expected.

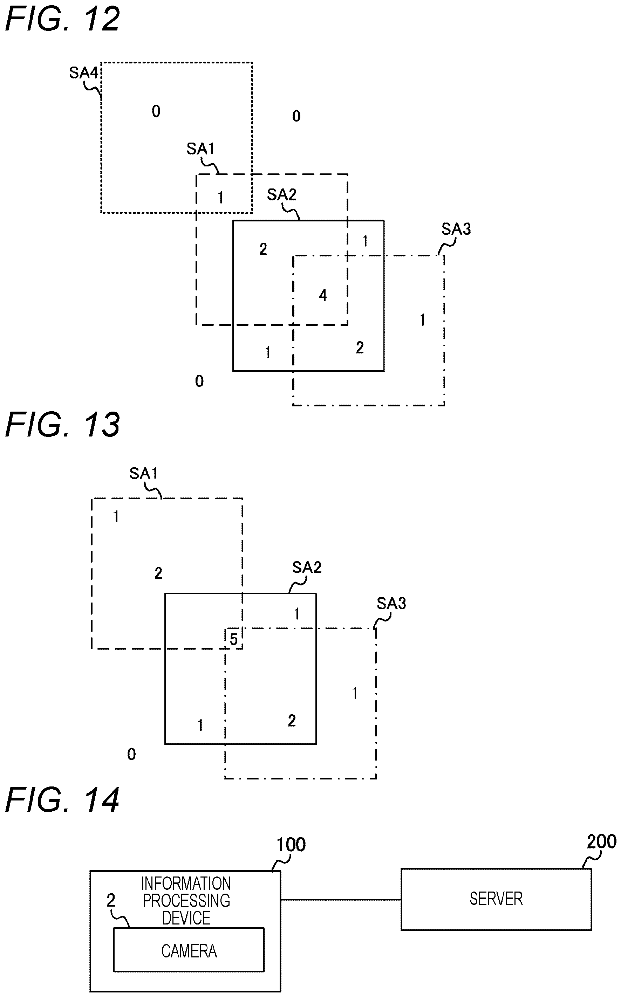

FIG. 12 illustrates another example of weighting according to a voter. In the example of FIG. 12, a label value is calculated by excluding a vote of an annotator who designates a designated region SA4 that is most different from designated regions designated by other annotators (for example, the area of an overlapping region is the smallest). According to this example, there is a high possibility that evaluations by inexperienced or non-expert annotators can be excluded, and the detection accuracy can be improved by reducing error factors.

Although FIG. 12 illustrates an example in which an annotator to be excluded from voting is selected in units of images, an annotator to be excluded from voting may be selected based on votes (designation of designated regions) for a plurality of images.

FIG. 13 illustrates an example of weighting according to a voting area. In the example of FIG. 13, an example is illustrated in which when the area of a partitioned region for each number of votes is small, a label value is calculated with a large weight. According to this example, it is possible to avoid a situation in which information on a region having a small area is buried in information on a region having a large area and is not sufficiently learned. Accordingly, even a lesion having a small area can be accurately detected as a biopsy region.

Labels may be assigned by changing the weighting according to an image type. For example, in a case in which pathological diagnosis is performed on a target image in advance and a grade of cancer is assigned to the target image, the weighting may be changed according to the level. Accordingly, by setting a higher label value for a target image of the severe cancer, it is possible to cause a machine learning model to learn so as to avoid biopsy region overlooking for the severe cancer. Specifically, for example, if the grade of cervical intraepithelial neoplasia is CIN2 or higher, as illustrated in the example of FIG. 10, the label value may be calculated by increasing the weight of the region that is unanimously determined to be a biopsy region, whereas if the grade is less than CIN2, as illustrated in the example of FIG. 4, the label value may be calculated by equal weighting.

In addition, the labels calculated in the illustrative embodiment described above are proportional scales with a non-biopsy region as the reference (0), but the labels may be regarded as interval scales without a particular reference value, and interval scales may be used as labels. By using these scales as labels, inference by a machine learning model can be handled as a regression problem. The labels may be variables of an ordinal scale (for example, high (2), medium (1), low (0), and the like) in addition to proportional scales and interval scales. In this case, the inference is treated as ordinal regression.

In the illustrative embodiment described above, an example has been described in which a regression model is used as a machine learning model which is an inference unit, but the machine learning model may learn information input by a plurality of annotators without discarding the information, and labels of training data may be such that data selected from three or more different values indicating the degree of likelihood of being a detection target is assigned to each unit region of an image included in the training data as labels. Therefore, a classification model may be used as the machine learning model instead of the regression model, and in this case, for example, a cross-entropy error is used as a loss function.

As the classification model, a U-Net structure, which is an image segmentation model that divides an image into a plurality of parts by classifying each unit region (for example, pixel), may be adopted. The classification model may be a model that classifies into three or more different classes that indicate the degree of likelihood of being a detection target. As described above, in a case in which regions designated by three annotators is learned, for example, a three-channel U-Net structure may be adopted for the machine learning model, in which a classification result for a class A, which is a region where one or more annotators vote (that is, a region where the number of votes is 1 or more), is output to a first channel, a classification result for a class B, which is a region where two or more annotators vote (that is, a region where the number of votes is 2 or more), is output to a second channel, and a classification result for a class C, which is a region where all the three annotators vote (that is, a region where the number of votes is 3), is output to a third channel.

In this case, in the training data generation processing illustrated in FIG. 3, vectors in the same number as the number of channels can be generated for each unit region as labels in the training data for the machine learning model. Specifically, in step S4, labels may be generated and assigned to each unit region according to the number of votes as follows.
Unit region with 0 votes: [0, 0, 0]
Unit region with 1 vote: [1, 0, 0]
Unit region with 2 votes: [1, 1, 0]
Unit region with 3 votes: [1, 1, 1]

In this example, a first element of the label indicates whether it is the class A, a second element of the label indicates whether it is the class B, and a third element of the label indicates whether it is the class C.

By generating labels as vectors having the same number of the elements as the number of classes, which is three or more, as described above, the multi-label region problem can be treated as a binary region problem for each channel. Since each of the channels of the machine learning model interacts with the other channels, training these channels simultaneously can achieve higher inference accuracy in classifying into classes than in a case in which each channel is trained alone on the binary region problem. Therefore, even when a classification model is used, the detection target region (for example, the region with 3 votes) can be detected with higher accuracy as in a case in which a regression model is used.

In order to confirm the improvement of the inference accuracy with respect to the multi-label region problem, the inventors of the present application had four oncologists annotate biopsy regions (tumor regions) for 46 images, and generated training data having labels for classifying into three classes corresponding to the number of votes of 1 or more, the number of votes of 2 or more, and the number of votes of 3 or more, based on the number of votes from 0 to 4, and training data having labels for classifying into two classes corresponding to the number of votes less than 3 and the number of votes of 3 or more, and compared the detection accuracy of machine learning models obtained by learning based on these two types of training data.

Specifically, a neural network with a U-Net structure was used for the machine learning model, and learning was performed using two types of training data to detect regions where three or more people voted, and the degree of agreement between a region where three or more annotators voted and an inferred area was evaluated. When the degree of agreement was evaluated using five-fold cross-validation, the average intersection over union (IoU) was 0.364 when training with the training data having labels classified into three classes, and the average IoU was 0.331 when training with the training data classified into two classes, confirming that the performance is improved by classifying into three classes. These results suggest that higher accuracy can be achieved by learning information that is classified into three or more values at the time of learning and performing binary classification, rather than learning information that is classified into values at the time of learning and performing binary classification.

The classification is not limited to this example. For example, the machine learning model may be trained such that a region where only one annotator votes (that is, a region with 1 vote) is defined as a class A and a classification result for the class A is output to a first channel, a region where two annotators vote (that is, a region with 2 votes) is defined as a class B and a classification result for the class B is output to a second channel, and a region where all three annotators vote (that is, a region with 3 votes) is defined as a class C and a classification result for the class C is output to a third channel.

In this case, in step S4 of the training data generation processing illustrated in FIG. 3, the labels can be generated as follows. In this case as well, a first element of the label indicates whether it is the class A, a second element of the label indicates whether it is the class B, and a third element of the label indicates whether it is the class C.
Unit region with 0 votes: [0, 0, 0]
Unit region with 1 vote: [1, 0, 0]
Unit region with 2 votes: [0, 1, 0]
Unit region with 3 votes: [0, 0, 1]

A machine learning model may be adopted, in which a new class X indicating a region in which the number of votes is 0 is defined and a four-channel U-Net structure is adopted. In this case, in step S4 of the training data generation processing illustrated in FIG. 3, a one-hot vector may be generated as follows. In this example, the first element, the second element, the third element, and the fourth element correspond to the class X, the class A, the class B, and the class C, respectively.
Unit region with 0 votes: [1, 0, 0, 0]
Unit region with 1 vote: [0, 1, 0, 0]
Unit region with 2 votes: [0, 0, 1, 0]
Unit region with 3 votes: [0, 0, 0, 1]

In the illustrative embodiment described above, the system 1 including the training data generation device 10, the learning device 20, and the region detection device 30 has been exemplified, but the system 1 may independently include these devices or may include these devices in a single device. For example, the training data generation device 10 and the learning device 20 may be a single device, and the region detection device 30 may be a different device. The learning device 20 and the region detection device 30 may be a single device, and the training data generation device 10 may be a different device. It is preferable that the region detection device 30 includes an imaging device. This is because the device can perform inference on a captured image and detect a detection target region. As illustrated in FIG. 14, the training data generation device 10, the learning device 20, and the region detection device 30 may be a device different from an information processing device 100 including the camera 2 that captures a target image, or may be a server 200 that receives and processes a target image via a network such as the Internet. That is, results obtained by various types of processing (training data generation processing, learning processing, region detection processing, and the like) performed on the server 200 may be received and displayed by a client terminal used by a user.

## Claims

1. A training data generation device comprising:
one or more processors configured to:
obtain a plurality of designated regions designated by a plurality of annotators as detection target regions with respect to a target image;
assign, as labels, data selected from three or more different values indicating the degree of likelihood of being a detection target to respective regions in the target image based on the plurality of designated regions; and
generate training data for a region estimator that estimates a detection target region by associating the target image with the labels assigned to the respective regions of the target image.

2. The training data generation device according to claim 1,
wherein the one or more processors assign the labels based on the number of designated regions including the respective regions among the plurality of designated regions.

3. The training data generation device according to claim 2,
wherein the one or more processors assign the labels based on a weighting calculation for the respective regions according to at least one of characteristics of the plurality of annotators designating the plurality of designated regions, a classification result of the target image in which the plurality of designated regions are designated, or an overlap of the plurality of designated regions.

4. The training data generation device according to claim 1,
wherein the data selected from the data of three or more values is a vector which has the same number of elements as three or more different classes indicating the degree of the likelihood of being a detection target, and indicates a classification result into the three or more classes.

5. The training data generation device according to claim 1,
wherein the data selected from the data of three or more values is a variable value of an ordinal scale, an interval scale, or a proportional scale selected from three or more different values indicating the degree of likelihood of being a detection target.

6. A learning device comprising:
one or more processors configured to:
input the target image included in the training data generated by the training data generation device according to claim 1 to a region estimator that estimates a detection target region; and
adjust a parameter of the region estimator based on a comparison result between values corresponding to the respective regions in the target image output from the region estimator and values of the labels corresponding to the respective regions included in the training data.

7. A region detection device comprising:
one or more processors configured to:
input a target image to a region estimator trained by the learning device according to claim 6; and
output a detection result of the detection target region detected from the target image based on a classification result, the classification result being obtained by classifying values corresponding to respective regions in the target image output from the region estimator using the labels.

8. A region detection device comprising:
an input unit configured to input a target image to a region estimator trained by the learning device according to claim 6;
a classification unit configured to classify, based on a predetermined threshold, values corresponding to respective regions in the target image output from the region estimator into numbers less than the number of possible values of the labels included in the training data of the region estimator; and
an output unit configured to output a detection result of the detection target region detected from the target image based on the classification of the values corresponding to the respective regions in the target image.

9. The region detection device according to claim 7,
wherein the output unit displays the classification result as an image.

10. The region detection device according to claim 9, further comprising:
an imaging device configured to capture the target image.

11. A computer program causing a computer to perform:
obtaining a plurality of designated regions designated by a plurality of annotators as detection target regions with respect to a target image;
assigning, as labels, data selected from three or more different values indicating the degree of likelihood of being a detection target to respective regions in the target image, based on the plurality of designated regions; and
generating training data for a region estimator that estimates a detection target region by associating the target image with the labels assigned to the respective regions of the target image.

12. A computer program causing a computer to perform:
inputting the target image included in the training data generated by the training data generation device according to claim 1 to a region estimator that estimates a detection target region; and
adjusting a parameter of the region estimator based on a comparison result between values corresponding to the respective regions in the target image output from the region estimator and values of the labels corresponding to the respective regions included in the training data.

13. A computer program causing a computer to perform:
inputting a target image to a region estimator trained by the learning device according to claim 6; and
outputting a detection result of the detection target region detected from the target image based on a classification result, the classification result being obtained by classifying values corresponding to respective regions in the target image output from the region estimator using the labels.
